# EUROPEAN PATENT SPECIFICATION

(11) **EP 1 916 616 B1**
(45) Date of publication and mention of the grant of the patent: **11.05.2011**
(21) Application number: 07117404.9
(22) Date of filing: 27.09.2007
(51) Int. Cl.: G06K 7/00

(54) **Method for response control of an RFID tag, corresponding RFID system, reader/wrtiter and computer porgram**
Verfahren und zur Steuerung des Ansprechverhaltens eines RFID-Etiketts, entsprechendes RFID-System, Lese-/Schreibvorrichtung und Computerprogramm
Procédé pour le contrôle de réponse d'une étiquette RFID, système RFID, lecteur et logiciel

(30) Priority: 23.10.2006 JP 2006287523; 14.09.2007 JP 2007238716
(43) Date of publication of application: 30.04.2008
(60) Divisional application: 08168354.2
(73) Proprietor: Fujitsu Ltd., Kawasaki-shi, Kanagawa 211-8588 (JP)
(72) Inventor: Sugano, Hiroyasu c/o FUJITSU LIMITED, Kawasaki-shi, Kanagawa 211-8588 (JP); Matsui, Kazuki c/o FUJITSU LIMITED, Kawasaki-shi, Kanagawa 211-8588 (JP); Matsuda, Masahiro c/o FUJITSU LIMITED, Kawasaki-shi, Kanagawa 211-8588 (JP)
(74) Representative: Wilding, Frances Ward

(56) References cited:
- EP-A- 1 544 788
- EP-A2- 1 562 133
- EP-A2- 1 901 197
- US-A1- 2005 263 591

## Description

### TECHNICAL FIELD

The present invention relates to a reader/writer for transmitting and receiving data by radio communication with an RFID (Radio Frequency Identification) tag and a data communication method between the RFID tag and the reader/writer.

### BACKGROUND ART

In recent years, development for practical use of an RFID tag (also called a radio tag, IC tag, non-contact type ID, non-contact type IC and transponder or the like) has been progressed and thereby an RFID system utilizing such RFID tag has been introduced in various fields.

The RFID tag is roughly classified into a "passive type" and an "active type".

The active type RFID tag comprises a battery to realize self-feeding of electrical power. On the other hand, the passive type RFID tag does not comprise a battery and therefore cannot realize self-feeding of electrical power. Accordingly, the passive type RFID generates a current when it receives a radio frequency signal transmitted from a reader/writer. The current generated is then supplied, after the rectification, to each circuit of the RFID tag as the regulated supply voltages. The RFID tag can be operated through supply of such electrical power.

Moreover, upon the reader/writer transmitting data to the RFID tag and receiving data from the RFID tag, the reader/writer searches (inventories) the RFID tag existing within the communication-enabled range of an antenna of the read/writer. When a search command of the RFID tag is transmitted to the RFID tag from the reader/writer, the RFID tag is supplied electrical power from the field and receives the search command. Then the RFID tag transmits the own tag ID to the reader/writer as a response to the search command. The reader/writer transmits, upon reception of the tag ID from the RFID tag, a command indicating the completion of identification state (DATA_READ command for ISO/IEC 18000-6 Type B) to switch the RFID tag to the state (DATA_EXCHANGE state for ISO/IEC 18000-6 Type B) for enabling data transmission and reception between the reader/writer and RFID tag. The RFID tag generates, upon reception of the command from the reader/writer, response contents in accordance with contents instructed by the command and then transmits the same contents to the reader/writer. Thereafter, The RFID tag reads the information stored in the memory thereof or writes information to the memory.

In the case where a plurality of RFID tags exist within the communication-enabled range of the antenna of the reader/writer at the time of searching the RFID tag, a plurality of RFID tags transmit simultaneously the responses for the search command. Therefore, the reader/writer sometimes enters the situation that it cannot receive the responses because of mutual interferences among the responses. In view of avoiding such a situation, the reader/writer and the RFID tag are respectively provided with some collision arbitration functions.

ISO/IEC 18000-6 type B and C specifications provide a memory flag function which can temporarily store some information. The memory flag function can be used to reduce the number of tags participating in the collision arbitration by sending a command to indicate a condition for responding to the search command, and therefore to improve the overall performance.

EP-A-1 544 788 discloses a radio frequency identification transponder wherein a transmitter provides a plurality of temporally spaced interrogating signals which are received by a receiver which incorporates a signal processor, wherein the signal processor extracts an identifier from the interrogation signal and is responsive to the identifier and the stored data to determine whether some or all of the identifier is stored in a dynamic memory array. A time stamp is stored in the transponder when it is powered up by a reader.

US 2005/263591 discloses an apparatus and method to identify devices including a first set of commands to identify devices in a first state and a second set of commands to identifydevices in a second state, wherein devices identified in the first state are placed in the second state and devices identified in the second state are placed in the first state

### DISCLOSURE OF THE INVENTION

However, since the passive type RFID tag does not comprises a battery as explained above, even when the flag is stored in the temporary memory, feeding of electrical power for maintaining the stored contents in the temporary memory cannot be continued in the case where the tag goes out of the communication-enabled range of antenna or the radio transmission condition is rather bad even when the tag exists within the communication-enabled range. As a result, the flag stored in the temporary memory is sometimes cleared. Therefore, if the flag stored in the temporary memory is cleared, the RFID tag sends a response when it receives the search command from the reader/writer.

In the case where the flag is cleared in adequate time, the RFID tag is allowed to return again to the state for sending a response for the search command. However, if the RFID tag which has already been recognized by the reader/writer returns to the state for sending a response for the search command while other RFID tags are still trying to respond, the problem of interference among the responses of a plurality of RFID tags still cannot be solved.

According to a first aspect of the present invention there is provided a method for controlling a response of an RFID tag which transmits a response in accordance with an inquiry from a reader/writer, the method comprising steps of:
transmitting, from the reader/writer, a search command for detecting the RFID tag within the communication-enabled range of the reader/writer together with a first response control information for determining whether the RFID tag has already transmitted the response, and
comparing, in the RFID tag, upon reception of the search command from the reader/writer, the first response control information transmitted together with the search command with a second response control information stored in a non-volatile memory of the RFID tag,
determining, in the RFID tag, not to transmit the response to the search command when the first response control information is identical to the second response control information,
transmitting, in the RFID tag, a response to the search command when the first response control information is different from the second response control information, and updating the second response control information stored in the non-volatile memory of the RFID tag with the first response control information received from the reader/writer.

According to a second aspect of the present invention there is provided an RFID system comprising: a reader/writer operable to communicate by radio with an RFID tag,
a computer operable to have mutual communication with the reader/writer,
wherein the computer comprises a generating part which generates a first response control information for determining whether or not the RFID tag responds to a search command, and
a search instructing part which is operable to transmit, to the reader/writer, a search instructing command for instructing detection of the RFID tag existing within the communication-enabled range of the reader/writer together with the first response control information generated by the generating part,
wherein the reader/writer comprises:
a receiving part which is operable to receive the search instructing command and the first response control information transmitted from the computer, and
a search command transmitting part which is operable to transmit, to the RFID tag, the search command for detecting the RFID tag existing in the communication-enabled range of the reader/writer together with the received first response control information,
   wherein the RFID tag is operable to:
   compare, upon reception of the search command from the reader/writer, the first response control information with a second response control information stored in a non-volatile memory of the RFID tag;
   determine not to transmit the response to the search command when the first response control information is identical to the second response control information; and when the first response control information is
   different from the second response control information, to transmit a response to the search command, and to update the second response control information stored in the non-volatile memory of the RFID tag with the first response control information received from the reader/writer.

According to a third aspect of the present invention there is provided a reader/writer for use in an RFID system, the reader/writer being operable to:
receive from a computer a search instructing command;
upon reception of the search instructing command, to generate a search command including a first response control information and an address area indicating a memory region of a non-volatile memory of an RFID tag; and
   to transmit the search command to the RFID tag; wherein
   the search command instructs the RFID tag to respond only if data not identical to the first response control information is stored in the memory region indicated in the address area, and
   either the search instructing command includes the first response control information, or the reader/writer is operable to generate the first response control information.

According to a fourth aspect of the present invention there is provided a computer program which, when executed by a computer, causes the computer to become the reader/writer of the third aspect of the invention.

Preferred features of the present invention will now be described, purely by way of example, with reference to the accompanying drawings, in which:-
Fig. 1 is a Diagram showing an example of a system structure of a first embodiment and a second embodiment of the present invention;
Fig. 2 is a Flowchart showing an example of content of a host computer according to the present invention;
Fig. 3 is Flowchart showing an example of content of processes of a reader/writer according to the present invention;
Fig. 4 is a Flowchart showing an example of content of processes of an RFID tag according to the present invention;
Fig. 5 is a Diagram showing an example of a search command utilizing the present invention;
Fig. 6 is a Diagram showing an example of content stored in a non-volatile memory of the RFID tag according to the present invention;
Fig. 7 is a Diagram showing an example of content stored in a non-volatile memory of the RFID tag according to the present invention;
Fig. 8 is a Diagram showing a structure of the host computer of a third embodiment of the present invention;
Fig. 9 is a Flowchart showing an example of processes of the host computer of the third embodiment of the present invention;
Fig. 10 is a Flowchart showing an example of processes of the reader/writer of a fourth embodiment of the present invention; and
Fig. 11 is a Diagram showing an example of the system structure of a fifth embodiment of the present invention.

### Detailed Description of the Invention

The inventors of the present invention have focused attention to the fact that some passive RFID tags have not only a temporary memory which clears stored contents if the power-feeding is suspended but also a non-volatile memory. When the information showing the completion of a search command is stored in such non-volatile memory, such information is held without relation to feeding of electrical power. Therefore, the RFID tag does not respond to the search command indicating the response condition including the same information after it has once sent a normal response for the search command.

Meanwhile, when the information indicating the completion of the search command is stored in a non-volatile memory, such information is stored continuously. Accordingly, even when the RFID tag enters the state that it must respond again for the search command, the situation is generated again in which the RFID tag does not respond for such search command because of the information stored in the non-volatile memory. A method for sending a command to clear the information stored in the non-volatile memory in the adequate time has also been proposed. However, since data transmission and reception between the reader/writer and the RFID tag are conducted by radio, a situation will be generated depending on the radio transmission condition that the RFID tag cannot receive the update command transmitted from the reader/writer or that even when such update command is received, feeding of electrical power to execute the update command cannot be acquired sufficiently and thereby the information indicating the completion of the search command stored in the non-volatile memory cannot be cleared.

The inventors of the present invention have also focused attention to the fact that, when a method for updating information contained in the response condition of the search command in the predetermined timing is employed in the system side, no other clearing commands to reset the information in the non-volatile memory showing the completion of the previous search command are necessary. The RFID tag changes contents of the information showing the completion of the search command when the command contains new response condition and the processing in the tag is successfully completed. The RFID tag compares the response condition received with the information stored in the non-volatile memory. When these information pieces are identical, the RFID tag does not respond for the search command, but when these are different, the RFID tag sends a response. Thereby, the necessity of response for the search command of the RFID tag can be controlled even when the information stored in the non-volatile memory is not updated.

As explained above, it is an object of the present invention that, once an RFID tag is inventoried by a search command from the reader/writer, the response from the same RFID tag to other search commands is never transmitted multiple times, therefore preventing duplicate processing of the same tag.

The preferred embodiments of the present invention will be explained with reference to the following embodiments.

### <First Embodiment>

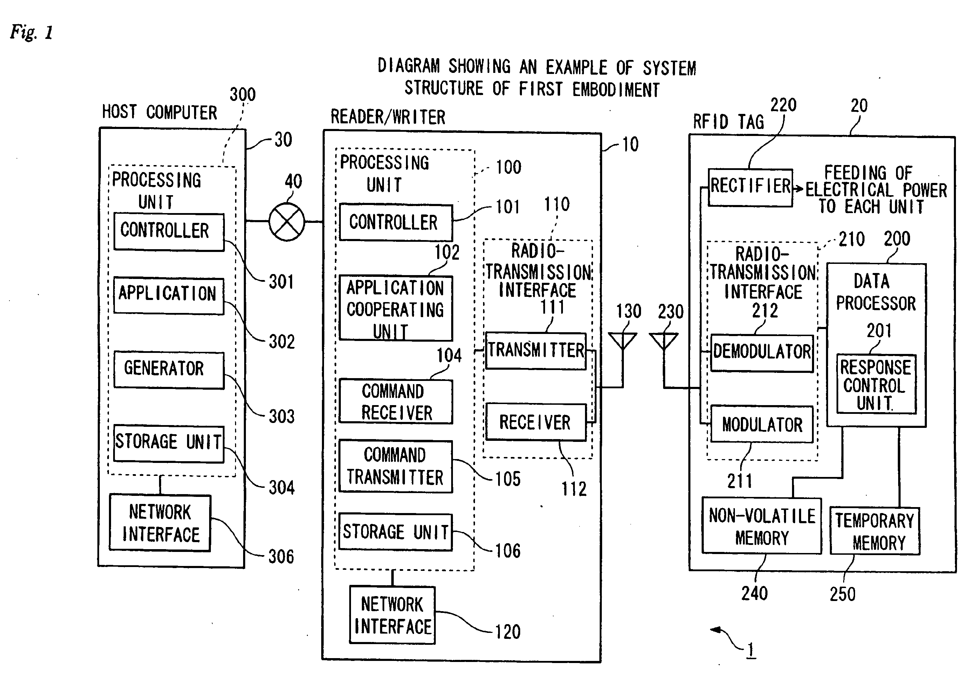

Fig. 1 is a diagram showing a structure of RFID system 1. The RFID system 1 includes a reader/writer 10, an RFID tag 20, and a host computer 30. The reader/writer 10, RFID tag 20, and host computer 30 are respectively illustrated as a single element, but a plurality of these elements may also be used.

The host computer 30 roughly includes a processing unit 300 and a network interface 306, while the processing unit 300 includes a controller 301, an application 302, a generator 303, and a storage unit 304. The controller 301 controls various processes of the host computer 30. The application 302 is operated in cooperation with the reader/writer 10 in order to transmit various instructions to the reader/writer 10 and receive information from the reader/writer 10. The generator 303 generates a parameter to be transferred to the reader/writer 10 when the host computer 30 instructs the reader/writer 10 to detect (hereinafter referred to as "inventory process") the RFID tag 20 existing in the communication-enabled range of the reader/writer 10. This parameter is the information (hereinafter, referred to as the "response control information") used for controlling the RFID tag 20 detected by the reader/writer 10 to not send responses many times in the sequence of the inventory process.

The reader/writer 10 comprises a processing unit 100, a radio-transmission interface 110, a network interface 120, and an antenna 130.

The radio-transmission interface 110 includes a transmitter 111 and a receiver 112. The transmitter 111 modulates a sending signal to transmit data to the RFID tag 20 via the antenna 130. The receiver 112 receives and demodulates a radio frequency signal transmitted from the RFID tag 20 via the antenna 130. Transmission of the sending signal to the RFID tag 20 and reception of the receiving signal from the RFID tag 20 are conducted through the antenna 130. Moreover, the radio-transmission interface 110 generates a radio frequency signal and transmits the same signal to the RFID tag 20 via the antenna 130 in order to activate the RFID tag.

A processing unit 100 includes a controller 101, an application cooperating unit 102, a command receiver 104, a command transmitter 105, and a storage unit 106. The controller 101 controls operations of the reader/writer such as sending of instructions to each section and transmission of the result of processes in each section in accordance with a command issued from the application 302 through communication with application of the host computer 30 via the network interface 120. The application cooperating unit 102 obtains, upon reception of the instruction to execute the inventory process from the host computer 30, the parameter included in the executing instruction, generates a search command and transmits such search command to the RFID tag 20 via the command transmitter 105 and the transmitter 111. The command receiver 104 receives the receiving signal demodulated in the receiver 112. The command transmitter 105 sends the command and data to be transmitted to the RFID tag 20 through the transmitter 111. The data required for processes in each section is stored or updated in the storage unit 106.

The RFID tag 20 includes a data processor 200, a non-volatile memory 240, a temporary memory 250, a modulator 211, a demodulator 212, a rectifier 220, and an antenna 230. The demodulator 212 executes a demodulating process for the signal received from the reader/writer 10 via the antenna 230 and transfers the demodulated signal to the data processor 200. The rectifier 220 generates a current upon reception of the signal from the reader/writer 100 via the antenna 230 and supplies, after implementation of the rectifying process to the generated current, an electrical power to a processor of the data processor 200 and a storage unit of each memory. The data processor 200 executes the processes in accordance with instructions (search command, various write/read commands or the like) transmitted from the reader/writer 10. The modulator 211 executes modulation process upon reception of the processing result from the data processor 200 and then transmits the processing result, after the modulation process, to the reader/writer 10 via the antenna 230. Moreover, the data processor 200 comprises, as a characteristic of the present invention, a response controller 210 for controlling transmission of responses to thereby prevent the sending of a response until a request for repeated response is generated for the RFID tag 20 which has succeeded in sending of the response for the search command when the search command is received from the reader/writer 10. ISO/IEC 18000-6 Type B specification conformant tags have implemented this component as a function of data processor because this is a mandatory feature. The non-volatile memory 240 and the temporary memory 250 store and retrieve data in accordance with write and read operations of data executed by the data processor 200. The non-volatile memory 240 is in the state for receiving supply of necessary electrical power for operation by assuring the electrical power and is capable of holding the stored contents for a long period of time. The temporary memory 250 receives supply of electrical power with the rectifier 220 and therefore it can hold the stored contents for the period for operation by receiving the electrical power supplied with the rectifier 220.

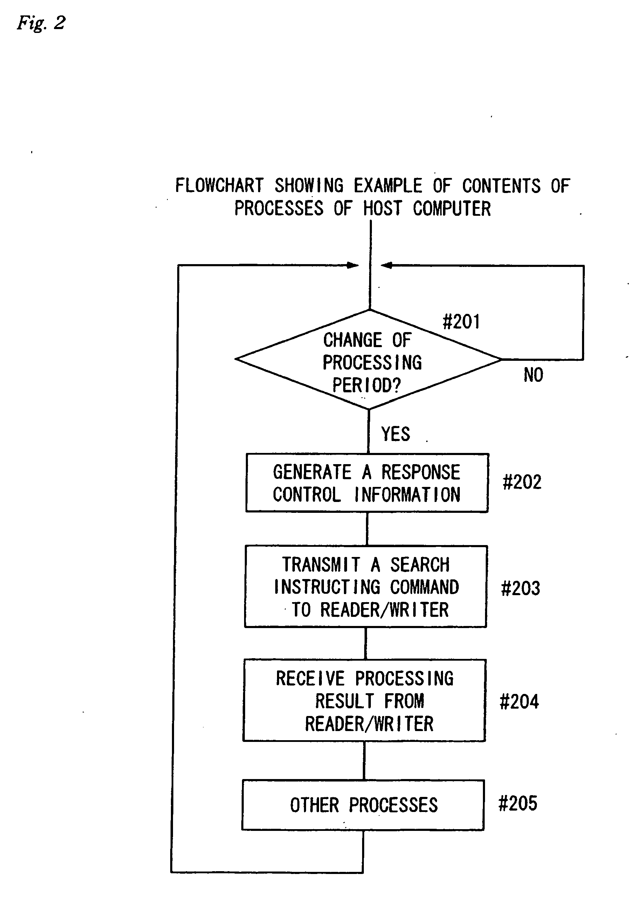

Fig. 2 is a flowchart showing an example of the processes executed by the host computer.

The application 302 of the host computer 30 determines the start of a processing period (#201 of Fig. 2). The processing period means the period for searching and accessing to the RFID tag existing in the communication-enabled range of the reader/writer 10. Thus, starting the processing period implies the change of the response control information. For example, such start timing may be indicated as follows.
(1) When a plurality of products with RFID tags are placed in a cart being moved with a belt conveyor or the like, the start timing is determined as the timing detected by a sensor in the case where the processing period is started in the application at the timing that the cart which has reached the predetermined location is detected with the sensor.
(2) In the case of an application where the processing period is started at the time that an operator inputs an instruction with manual operation, the start timing is determined as the timing at which the input of instruction by the operator is accepted.
(3) In the case of an application where the next process is started immediately after the preceding process has been completed until matching with the predetermined completing condition is attained, the start timing is determined as the timing at which an instruction for triggering start of the next process is detected.

When the start timing of processing period is determined (Yes in #201 of Fig. 2), the generator 303 generates the response control information (#202 of Fig. 2).

The following method, for example, has been proposed as a method of generating the response control information.
(1) The time when generation of response control information is instructed by the application 302 is obtained from the system time as the response control information.
(2) A random number generated by the random number generating program is set as the response control information.

In this embodiment, an example in which the time in paragraph (1) is obtained first as the response control information will be explained. The generator 303 accesses, upon acceptance of an instruction for generating the response control information, to a timer (not illustrated) provided in the host computer 30, or to a server (not illustrated) for time distribution which is connected via the network 40 for mutual communication to obtain the time information at this time and defines the obtained time information as the response control information. In the case where the acquired time information is "AM 9:00 of Oct. 10, 2006", such time information is set as the response control information. As an expression format of the time information, it is convenient that the elapsed time from the predefined base time can be used as response control information. In this embodiment, an example where the time and day indicated as an example are used directly will be utilized to simplify the explanation below.

Next, the application 302 sets the response control information generated by the generator 303 as a parameter, generates a command (hereinafter referred to as the "searchinstructingcommand")forinstructingdetection of the RFID tag 20 existing in the communication-enabled range of the antenna 130, and transmits such command to the reader/writer 10 (#203 in Fig. 2).

Upon reception of the processing result from the reader/writer 10 (#204 of Fig. 2), the application 302 executes the necessary process for each jobs and works (#205 of Fig. 2). For the processes required for various jobs and works, the executable processes required are generated and registered by utilizing various programming methods.

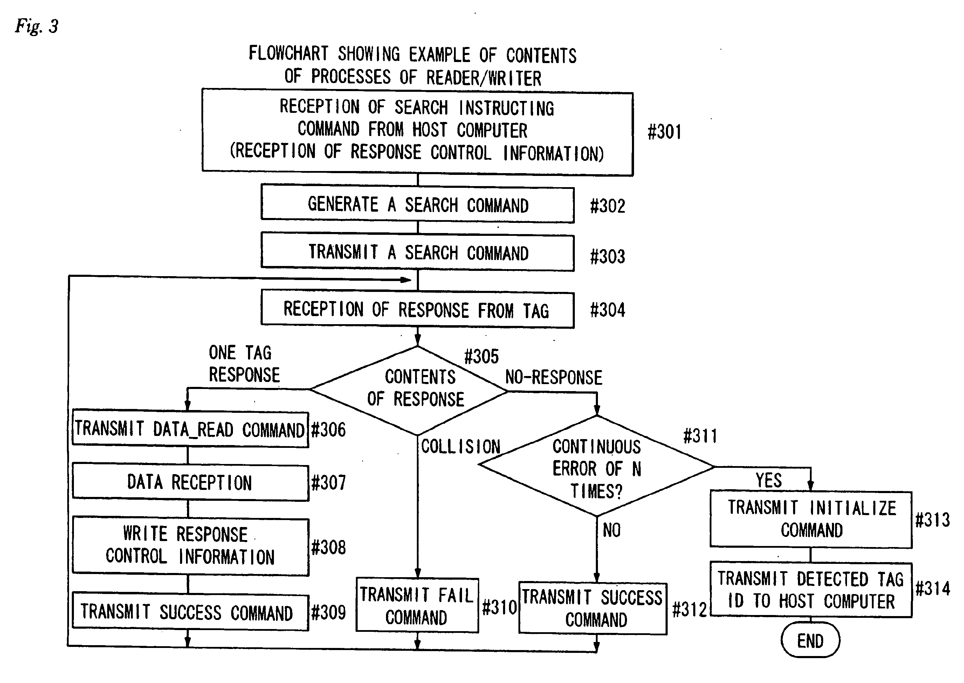

Fig. 3 is a flowchart showing an example of processes executed by the reader/writer 10.

The application cooperating unit 102 of the reader/writer 10 acquires, upon reception of the search instructing command transmitted from the host computer 30 (#301 of Fig. 3), the response control information preset in the parameter of the search instructing command and generates a command (hereinafter, referred to as "search command") for detecting the RFID tag 20 existing in the communication-enabled range of the antenna 130.

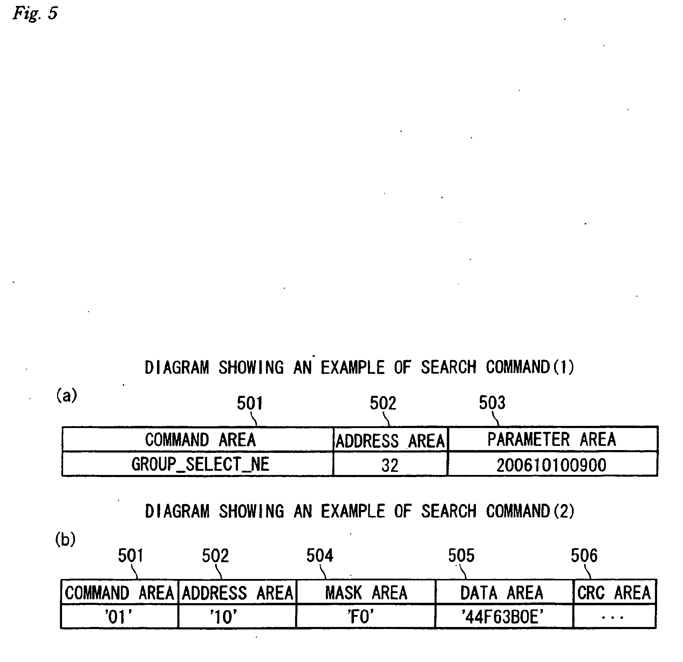

An example of the search command is shown in Fig. 5(a). The search command is formatted with a command area 501, an address area 502, parameter area 503. In the command area 501, a command "GROUP_SELECT_NE", is set. This command instructs an RFID tag to respond if data stored in the memory area designated by the address data is not equal to the value designated in the parameter area 503. The concrete command name or its expression is not limited to this example and an equivalent operation may be attained when the embodied system is based on other specifications. Using this command, the reader/writer 10 instructs only the RFID tags to which data other than the designated value by the command is written at the designated address to send a response, and the response process to the search command is started again for the RFID tag which has completed the previous search command with other response control information without clearing the response control information 603 stored in the non-volatile memory 240 of the RFID tag 20. Moreover, even in the case where a write operation to the RFID tag 20 has failed and thereby an illegal value different from the designated value is written, upon the reader/writer writing the designated value to the RFID tag 20, the RFID tag 20 can be detected by the reader/writer 10 because the tag can send a response for the search command transmitted thereafter from the reader/writer 10.

The address area 502 indicates offset of a memory region of the non-volatile memory 240 of the RFID tag 10 for comparison of the value designated in the parameter area 503 with a value written in the offset position designated by the address area 502. The example does not contain data length of the parameter area 503 explicitly because the predetermined fixed size is assumed (for example, eight bytes). However, in the case of considering a parameter of variable length, the parameter length information may also be designated.

In the parameter area 503, the parameter (AM 9:00, Oct. 10, 2006) obtained from the search instructing command received from the host computer 30 is set as the eight bytes numerical number expressed by its decimal format"200610100900". The numerical number expresses directly the time and date for easier understanding of contents of the invention. However, this parameter can be obtained from different sources and expressed in another format for easier processing in the computer.

The application cooperating unit 102 converts the generated search command into the signal which the RFID tag 10 can receive through the command transmitter 105 and transmitter 111 and thereafter transmits this signal as the radio wave from the antenna 130 (#303 of Fig. 3).

The controller 101 determines the situation of response (#304 of Fig. 3) when it receives a response from the RFID tag 20 (#305 of Fig. 3). When the reader/writer 10 transmits the search command, the RFID tags 20 existing in the communication-enabled range of the antenna 130 send simultaneously the responses. When a plurality of RFID tags 20 transmit the responses simultaneously, the responses from a plurality of RFID tags 20 interfer with each other, resulting in the situation that the reader/writer 10 cannot receive the responses. This phenomenon is called "collision." Moreover, when the responses are all received normally from all RFID tags 20, no response for the search command is received from the RFID tag 20. This situation is called "no-response". The situation that the response for the search command from the RFID tag 20 is received normally without any collision is called the "one-tag-response".

In the case where the response situation is "one-tag-response" ("one-tag-response" in #305 of Fig. 3), the controller 101 generates the "DATA_READ" command to the RFID tag 20 having transmitted the response and then transmits this command via the command transmitter 105, transmitter 111 and antenna 130 (#306 of Fig. 3). The DATA_READ command is used to set the RFID tag 20 to the condition for making transmission and reception of data with the reader/writer 10.

When the controller 101 receives a response for the DATA_READ command from the RFID tag 20 (#307 of Fig. 3), the application cooperating unit 102 generates a write instruction for writing the response control information to the RFID tag 20 and then transmits the same write instruction to the RFID tag 20 (#308 of Fig. 3) via the command transmitter 105, transmitter 111 and antenna 130. After receiving a response to the write instruction, the application cooperating unit 102 generates a SUCCESS command indicating that the response process for the search command of a certain RFID tag 20 has been successfully completed and then transmits this command to the RFID tag 20 in a condition ready for communication with the antenna 130 via the command transmitter 105, transmitter 111 and antenna 130 (#309 of Fig. 3). The application cooperating unit 102 is waiting for the response from the other RFID tag 20 for the search command after transmission of the SUCCESS command (#304 of Fig. 3).

When the response from the RFID tag 20 for the search command is in the state of "collision" ("collision" in #305 of Fig. 3), the controller 101 generates a FAIL command indicating that the response for the search command cannot be received and transmits this command to the RFID tag 20 in a condition ready for communication with the antenna 130 via the command transmitter 105, transmitter 111, and antenna 130 (#310 if Fig. 3). After transmission of the FAIL command, the application cooperating unit 101 is waiting for response to the search command from the other RFID tag 20 (#304 of Fig. 3).

When the response to the search command from the RFID tag 20 is in the "no-response" state ("no-response" in #305 of Fig. 3), whether the state "no-response" has been repeated for N times is determined (#311 of Fig. 3). Here, a value N should be set as the number of times by which the reader/writer 10 can confirm that the search commands for the RFID tag 20 existing in the communication-enabled range have been completed and not is a temporary failure due to a radio transmission problem between the RFID tag 20 and the reader/writer 10. The SUCCESS command is generated and it is then transmitted (#312 of Fig. 3) to the RFID tag 20 in a condition ready for communication with the antenna 130 via the command transmitter 105, transmitter 111, and antenna 130 until the value reaches the N times (No in #311 of Fig. 3). After transmission of the SUCCESS command, the reader/writer 10 is waiting for a response to the search command from the other RFID 20 (#304 of Fig. 3). When the value reaches the N times (Yes in #311 of Fig.3), it means that the RFID tag 20 in the communication-enabled range has been detected. Therefore, the reader/writer 10 generates a INITIALIZE command to reset the state of the RFID tag 20 to the READY state as the initial state and transmits this INITIALIZE command to the RFID tag 20 in a state ready for communication with the antenna 130 via the command transmitter 105, transmitter 115 and antenna 130 (#313 of Fig. 3). Thereafter, the reader/writer 10 notifies the list of tag IDs of the RFID tags 20 detected by the search command to the host computer 30 (#314 of Fig. 3). The timing for notifying the tag ID of RFID tag 20 detected to the host computer is not limited to this timing. The tag ID may be notified each time when the tag ID of RFID tag 20 is detected or may also be notified for every predetermined number of times of detection of tag ID.

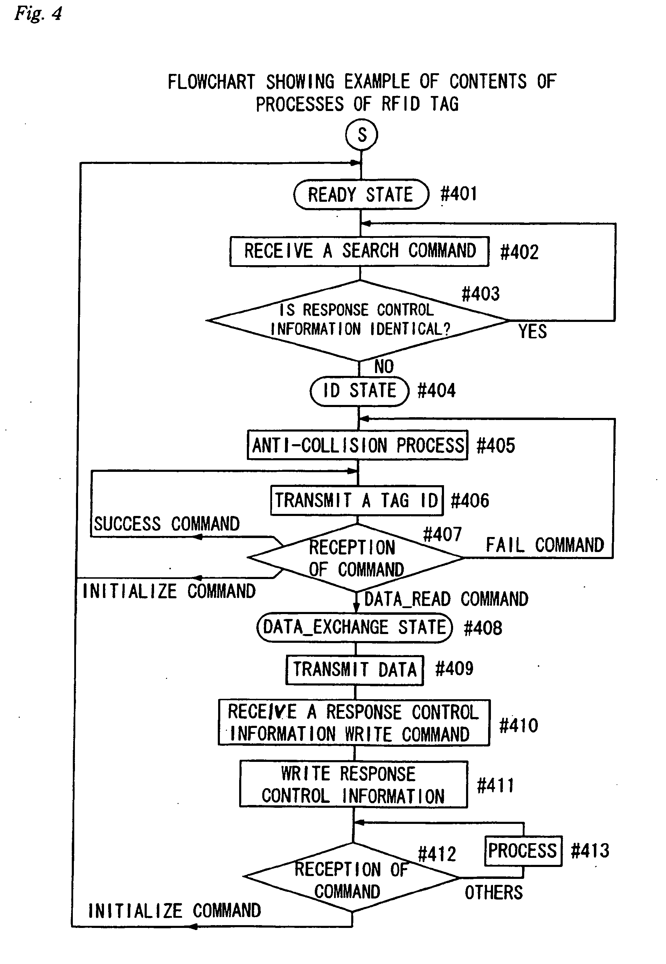

Fig. 4 is a flowchart shown an example of the process in the RFID tag 20.

The RFID tag 20 executes the demodulating process of the signal received with the demodulator 212, upon reception of the radio wave (including a command) transmitted from the reader/writer 10 via the antenna 2300 and also starts feeding of electrical power via the rectifier 220 for setting the RFID tag 20 to the condition being ready for operation (#410 of Fig. 4) .

The data processor 200 acquires the response control information 503 included in the search command in the case where the signal demodulated with the demodulator 212 is the search command (#402 of Fig. 4). The response control unit 201 compares the response control information 503 included in the search command and the response control information stored in the non-volatile memory 240 of the RFID tag 20 (#403 of Fig. 4). When the response control information 503 included in the search command is identical to the response control information 603 stored in the non-volatile memory 240 of the RFID tag 20 (Yes in #403 of Fig. 4), it means that the previous search command in this processing period has been completed normally. Therefore, it is determined that no response is required and it is also requested to wait for the next search command (#402 of Fig. 4). When the response control information 503 included in the search command is different from the response control information 603 stored in the non-volatile memory 240 of the RFID tag 20 (No in #403 of Fig. 4), it means the previous search command has not been completed yet, it is determined that the response is required and the RFID tag 20 is set to the condition for notifying the ID (#404 of Fig. 4).

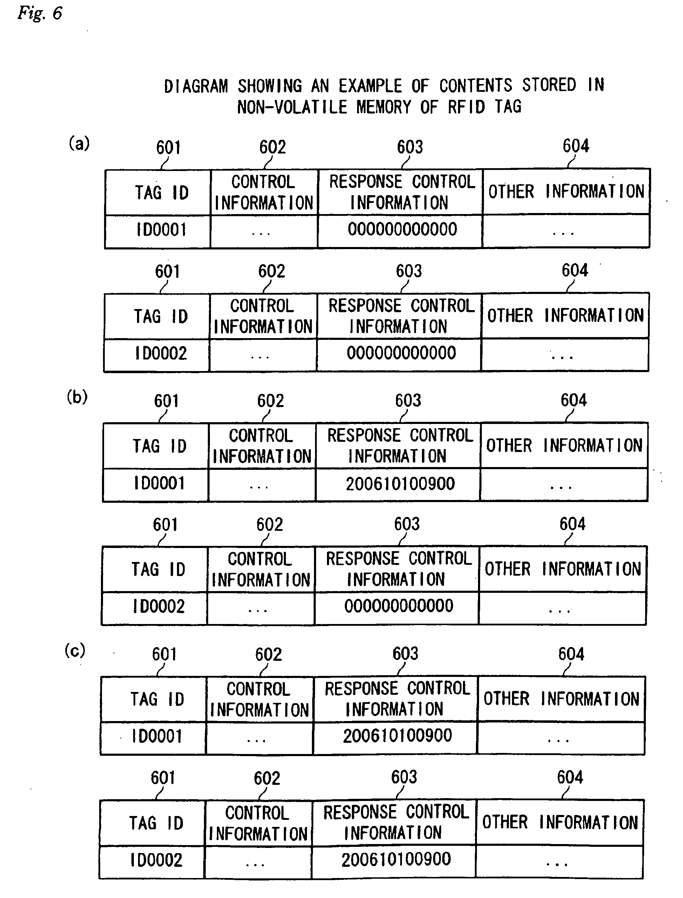

Fig. 6 shows an example of contents stored in the non-volatile memory 240 of the RFID tag 20. The non-volatile memory 240 stores a tag ID 601 for identifying the RFID tag 20, a control information 602 for controlling operation of the RFID tag, a response control information 503 for determining whether a response should be sent for the search command, and the other information 604. Content and arrangement stored in the non-volatile memory 240 are not limited to the above. For example, contents are arranged in the format conforming to the standards of various RFID tags.

Fig. 6 (a) shows an example of the initial contents of the RFID tag 20 in which the tag IDs are "ID0001" and "ID0002". In the tag ID601 area, the tag IDs "ID0001" and "ID0002" of the RFID tag 20 are respectively stored. In the response control information area 603, the initial states "000000000000" in the decimal format is respectively stored. In the other information area 604, the necessary data is stored. In the example shown in Fig. 6(a), since a value of the response control information 603 is "000000000000" in any of the RFID tags 20 where the tag IDs are "ID0001" and "ID0002", the response control information 503 included in the search command is different from the response control information 603 stored in the non-volatile memory 240 and therefore both RFID tags respond with their IDs and change to the ID state.

The larger the number of RFID tags 20 existing in the communication-enabled range of the antenna 130 of the reader/writer 10 is, the higher the probability of collision of the responses from the RFID tag 20 for the search command becomes. When the collision occurs, the reader/writer 10 transmits the FAIL command to the RFID tag 20 in the communication-enabled range. When the RFID tag 20 receives the FAIL command, if it is in the ID state, the collision arbitration process is conducted to control transmission of response to the reader/writer 10 and to resolve the collision of responses (#405 of Fig. 4). As the collision arbitration process (anti-collision process), for example, a random number is generated in the RFID tag to determine whether the response should be sent to the reader/writer depending on the predetermined numerical value condition (for example, 0 or 1, or for other example larger than the threshold value or not, etc.).

Here, it is assumed that the RFID tag 20 having the tag ID of "ID0001" is allowed to send a response to the search command after the collision arbitration process.

The data processor 200 of RFID tag 20 transmits "ID0001" as its own tag ID 601 to the reader/writer 10 (#406 of Fig. 4).

After transmission of the tag ID, the data processor 200 receives the command transmitted from the reader/writer 10 (#407 of Fig. 4). If the reader/writer 10 receives the tag ID transmitted from the RFID tag 20 normally as explained above, the reader/writer 10 transmits the DATA_READ command to the RFID tag 20.

When the command received from the reader/writer 10 is the DATA_READ command (DATA_READ command in #407 of Fig. 4), the RFID tag 20 shifts to the state (DATA_EXCHANGE state) being ready for exchange of data with the reader/writer 10 (#408 of Fig. 4). The data processor 200 reads the content of the data designated by the received DATA_READ command from the non-volatile memory 240 and then transmits the same contents to the reader/ writer 10 (#409 of Fig. 4).

When the response control information write command is received from the reader/writer 10 (Yes in #410 of Fig. 4), the response control 201 stores the response control information included in the write command ("200610100900" in the above example) to the response control information 603 of the non-volatile memory 240 (#411 of Fig. 4).

Thereafter, upon reception of the INITIALIZE command from the reader/writer 10 (INITIALIZE COMMAND IN #412 OF Fig. 4), the response control unit 201 resets the RFID tag 20 to the ready state (#401 of Fig. 4). When the other command is received, (#413 of Fig. 4), the response control unit 201 executes the process in accordance with content of command (#413 of Fig. 4) and waits for the next command (#412 of Fig. 4).

As shown in Fig. 6 (b), since the RFID tag 20 received and executed the response control information write command normally, the response control information 603 in the RFID tag 20 having the tag ID of "ID0001" has been updated from "000000000000" to "200610100900" which has been transmitted from the reader/writer 10. On the other hand, in the RFID tag 20 having the tag ID of "ID0002", the response control information still remains as "000000000000" because the response for the search command is not completed.

Next, Fig. 5 illustrates the situation where it is assumed that the search command is transmitted again to each RFID tag 20 from the reader/writer after the contents stored in the non-volatile memory 240 of the RFID tag 20 change to the state of Fig. 6(b).

Since the response control information 503 ("200610100900") of the search command is identical to the response control information 603 ("200610100900") stored in the non-volatile memory 240, the RFID tag 20 having the tag ID "ID0001" determines that a response is not required and does not transmit a response to the reader/writer 10. Therefore, it is prevented that the RFID tag 20 having completed the normal response to the previous search command sends the response for the search command with the same response control information many times. As such, the transmission of responses for the search command can be adequately reduced.

Meanwhile, since the RFID tag 20 having the tag ID of "ID0002" does not yet complete the response for the search command, the response control information 603 remains as "000000000000". Since the response control information 503 ("200610100900") of the search command is different from the response control information 603 ("000000000000") stored in the non-volatile memory 240, the response control unit 201 determines that the response is required for the search command and transmits the response for the search command to the reader/writer 10.

When the response for the search command is completed normally, content of the response control information 603 is changed to "200610100900" from "000000000000" as in the case of the RFID tag 20 having the tag ID of "ID0001". Thereafter, the RFID tag 20 having the tag ID of "ID0002" does not send the response for the search command including the response control information 503 of "200610100900".

These processes are repeated, as explained with reference to Fig. 3, until detection of the RFID tag 20 existing in the communication-enabled range of the antenna 130 of the reader/writer 10 is completed (Yes in #311 of Fig. 3).

Next, the process will be explained required for the situation where an RFID tag 20 receives another search command after all RFID tags have been completed to process to the previous search commands.

When the processing period is changed (Yes in #201 of Fig. 2) as explained above, the generator 303 of host computer 30 generates a new response control information to transmit a new search instructing command to the reader/writer 10 (#202 of Fig. 2). In the case where thetimeinformationobtainedis"AM9:05, Oct. 10, 2006", the generator 303 transmits a new search instructing command to the reader/writer 10 with "200610100905" used as the parameter (#203 of Fig. 2).

The reader/writer 10 having received the new search instructing command sets the parameter "20061010905" included in the search instructing command to the response control information 503 of the search command, then generates a search command with the response control information "20061010905" in the decimal format (#302 of Fig. 3), and transmits the new search command to the RFID tag 20 (#303 of Fig. 3).

The RFID tag 20 compares, upon reception of the search command (#402 of Fig. 4), the response control information 503 of the search command with the response control information 603 stored in the non-volatile memory 240 of the RFID tag 20 (#403 of Fig. 4). As shown in Fig. 6(c), the response control information of RFID tag 20 is "200610100900" and the response control information 503 of the search command is "200610100905" which is different from the former response control information. Therefore, the response for the search command is determined to be necessary (No in #403 of Fig. 4) and the tag ID of RFID tag 20 is transmitted to the reader/writer 10 as explained above (#406 of Fig. 4). As explained above, even when a response for the search command is needed to be sent again after the response control information 603 indicating that the response has been completed normally for the previous search command is stored in the non-volatile memory 240 of RFID tag 20, the response for the new search command can be started again without clearing the response control information 603 stored in the non-volatile memory 240 of RFID tag 20. Namely, at the beginning, the data "200610100900" was the information indicating that the processing of the previous search command was completed, but when the new response control information "200610100905" has been generated, the preceding information is no longer the response control information for the search command. Therefore, a new response can be sent again to the search command even when the response control information 603 stored in the non-volatile memory 240 of RFID tag 20 is not updated.

Moreover, when the normal response is completed for the new search command, the response control information 603 of the non-volatile memory 240 of RFID tag 20 is changed to "200610100905". Accordingly, since the response for the search command is suspended as explained above while the search command setting "200610100905" to the response control information 503 is valid, repeated response by the RFID tag 20 having completed the response for the new search command can be prevented.

In the embodiment explained above, an example of using the time information for the response control information has been explained, but a random number may also be used in place of the time information. In this case, a random number generator (not illustrated) for generating random numbers is provided in the host computer 30. The generator 30 generates a random number with the random number generator, upon reception of instruction for generation of the response control information and sets the generated random number as the response control information. The subsequent flow of the process will not be explained below in detail because these processes may be implemented by replacing the time information with the random number.

Moreover, any other method than using the time information or random number can be used if it can generate a different value whenever it is required, so long as it can be verified that the new response control information is same as or different from the previous one.

### <Second Embodiment>

This embodiment explains in case of using ISO/IEC 18000-6 Type B specification conformant tags.

Fig. 3 is a flowchart showing an example of processes executed by the reader/writer 10.

The application cooperating unit 102 of the reader/writer 10 acquires, upon reception of the search instructing command transmitted from the host computer 30 (#301 of Fig. 3), the response control information preset in the parameter of the search instructing command and generates a command (hereinafter, referred to as "search command") for detecting the RFID tag 20 existing in the communication-enabled range of the antenna 130.

An example of the search command based on the ISO/IEC 18000-6 Type B specification is shown in Fig. 5 (b) . The search command is formatted with a command area 501, an address area 502, a mask area 504, a data area 505, and a CRC area 506. In the command area 501, a command code "01" in hexadecimal format, which corresponds to a command "GROUP_SELECT_NE", is set. This command instructs an RFID tag to respond if data stored in the memory area designated by the address data is not equal to the value designated in the data area 505. The concrete command name or its expression is not limited to this example if the equivalent operation may be attained when the embodied system is based on other specifications. Using this command, the reader/writer 10 instructs only the RFID tags to which data other than the designated value by the command is written at the designated address to send a response, and the response process to the search command is started again for the RFID tag which has completed the previous search command with other response control information without clearing the response control information 603 stored in the non-volatile memory 240 of the RFID tag 20. Moreover, even in the case where a write operation to the RFID tag 20 has failed and thereby an illegal value different from the designated value is written, upon the reader/writer 10 writing the designated value to the RFID tag 20, the RFID tag 20 can be detected by the reader/writer 10 because the tag can send a response for the search command transmitted thereafter from the reader/writer 10.

The address area 502 indicates offset of a memory region of the non-volatile memory 240 of the RFID tag 10 for comparison of the value designated in the data area 505 with a value written in the offset position designated by the address area 502. The example does not contain data length of the data area 505 explicitly because the predetermined fixed size is assumed (for example, four bytes). However, in the case of considering a parameter of variable length, the parameter length information may also be designated.

A mask area 504 contains BYTE MASK information for data matching, and in this example data "F0" in hexadecimal format is used.

In the data area 505, the parameter ("1156987662") obtained from the search instructing command received from the host computer 30 is set as the four bytes numerical number expressed by its hexadecimal format "44F6380E". The numerical number is the elapsed time at the point of creating this command from the predefined base time. However, this parameter can be obtained from different sources and expressed in another format for easier processing in the computer.

A CRC area 506 contains an error detection code.

The application cooperating unit 102 converts the generated search command into the signal which the RFID tag 10 can receive through the command transmitter 105 and transmitter 111 and thereafter transmits this signal as the radio wave from the antenna 130 (#303 of Fig. 3).

The controller 101 determines the situation of response (#304 of Fig. 3) when it receives a response from the RFID tag 20 (#305 of Fig. 3). When the reader/writer 10 transmits the search command the RFID tags 20 existing in the communication-enabled range of the antenna 130 simultaneously send responses. When a plurality of RFID tags 20 transmits responses simultaneously, these responses from a plurality of RFID tags 20 interfer with each other, resulting in the situation that the reader/writer 10 cannot receive the responses. This phenomenon is called "collision". Moreover, when the responses are all received normally from all RFID tags 20, no response to the search command is received from the RFID tag 20. This situation is called "no-response". The situation that the response for the search command from the RFID tag 20 is received normally without any collision is called the "one-tag-response".

In the case where the response situation is the "one-tag-response" ("one-tag-response" in #305 of Fig. 3), the controller 101 generates the "DATA_READ" command to the RFID tag 20 having transmitted the response and then transmits this command via the command transmitter 105, transmitter 111 and antenna 130 (#306 of Fig. 3). The DATA_READ command is used to set the RFID tag 20 to the condition for making transmission and reception of data with the reader/writer 10.

When the controller 101 receives a response for the DATA_READ command from the RFID tag 20 (#307 of Fig. 3), the application cooperating unit 102 generates a write instruction for writing the response control information to the RFID tag 20 and then transmits the same write instruction to the RFID tag 20 (#308 of Fig. 3) via the command transmitter 105, transmitter 111 and antenna 130. After receiving a response to the write instruction, the application cooperating unit 102 generates a SUCCESS command indicating that the response process for the search command of a certain RFID tag 20 has been successfully completed and then transmits this command to the RFID tag 20 in a condition ready for communicating with the antenna 130 via the command transmitter 105, transmitter 111 and antenna 130 (#309 of Fig. 3). The application cooperating unit 102 is waiting for the response from the other RFID tag 20 for the search command after transmission of the SUCCESS command (#304 of Fig. 3).

When the response from the RFID tag 20 for the search command is in the state of "collision" ("collision" in #305 of Fig. 3), the controller 101 generates a FAIL command indicating that the response for the search command cannot be received and transmits this command to the RFID tag 20 in a condition ready for communicating with the antenna 130 via the command transmitter 105, transmitter 111, and antenna 130 (#310 if Fig. 3) . After transmission of the FAIL command, the application cooperating unit 101 is waiting for response to the search command from the other RFID tag 20 (#304 of Fig. 3).

When the response to the search command from the RFID tag 20 is in the "no-response" state ("no-response" in #305 of Fig. 3), whether the state "no-response" has been repeated for N times is determined (#311 of Fig. 3). Here, a value N should be set as the number of times by which the reader/writer 10 can confirm that the search commands for the RFID tag 20 existing in the communication-enabled range have been completed and is not a temporary failure due to a radio transmission problem between the RFID tag 20 and the reader/writer 10. The SUCCESS command is generated and it is then transmitted (#312 of Fig. 3) to the RFID tag 20 in a condition ready for communicating with the antenna 130 via the command transmitter 105, transmitter 111, and antenna 130 until the value reaches the N times (No in #311 of Fig. 3). After transmission of the SUCCESS command, the reader/writer 10 is waiting for a response for the search command from the other RFID 20 (#304 of Fig. 3). When the value reaches the N times (Yes in #311 of Fig.3), it means that the RFID tag 20 in the communication-enabled range has been detected. Therefore, the reader/writer 10 generates a INITIALIZE command to reset the state of the RFID tag 20 to the READY state as the initial state and transmits this INITIALIZE command to the RFID tag 20 in the state ready for communicating with the antenna 130 via the command transmitter 105, transmitter 115 and antenna 130 (#313 of Fig. 3). Thereafter, the reader/writer 10 notifies the list of tag IDs of the RFID tags 20 detected by the search command to the host computer 30 (#314 of Fig. 3). The timing for notifying the tag ID of RFID tag 20 detected to the host computer is not limited to this timing. The tag ID may be notified each time when the tag ID of RFID tag 20 is detected or may also be notified for every predetermined number of times of detection of tag ID.

Fig. 4 is a flowchart shown an example of the process in the RFID tag 20.

The RFID tag 20 executes the demodulating process of the signal received with the demodulator 212, upon reception of the radio wave (including a command) transmitted from the reader/writer 10 via the antenna 230 and also starts feeding of electrical power via the rectifier 220 for setting the RFID tag 20 to the condition being ready for operation (#410 of Fig. 4).

The data processor 200 acquires the response control information 503 included in the search command in the case where the signal demodulated with the demodulator 212 is the search command (#402 of Fig. 4) . Because the command code of the search command in this embodiment is "01" ("GROUP_SELECT_NE"), the response control unit 201 compares the response control information 505 included in the search command and the response control information stored in the non-volatile memory 240 of the RFID tag 20 (#403 of Fig. 4). When the response control information 505 included in the search command is identical to the response control information 603 stored in the non-volatile memory 240 of the RFID tag 20 (Yes in #403 of Fig. 4), it means that the previous search command in this processing period has been completed normally. Therefore, it is determined that no response is required and it is also requested to wait for the next search command (#402 of Fig. 4). When the response control information 505 included in the search command is different from the response control information 603 stored in the non-volatile memory 240 of the RFID tag 20 (No in #403 of Fig. 4), it means the previous search command has not been completed yet, it is determined that the response is required and the RFID tag 20 is set to the condition for notifying the ID (#404 of Fig. 4).

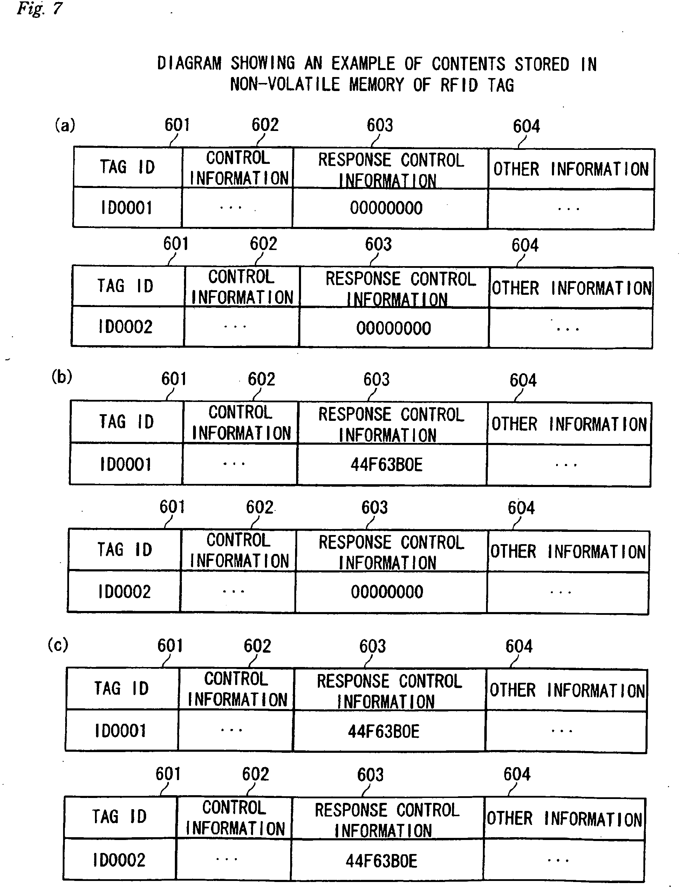

Fig. 7 shows an example of contents stored in the non-volatile memory 240 of the RFID tag 20. The non-volatile memory 240 stores a tag ID 601 for identifying the RFID tag 20, a control information 602 for controlling operation of the RFID tag, a response control information 505 for determining whether a response should be sent to for the search command, and other information 604. Content and arrangement stored in the non-volatile memory 240 are not limited to above ones. For example, contents are arranged in the format conforming to the standards of various RFID tags. For example, a data length of a tag ID area of ISO/IEC 18000-6 Type B specification conformant tag is 64 bits.

Fig. 7 (a) shows an example of the initial contents of the RFID tag 20 in which the tag IDs are "ID0001" and "ID0002". In the tag ID601 area, the tag IDs "ID0001" and "ID0002" of the RFID tag 20 are respectively stored. In the response control information area 603, the initial states "00000000" in the hexadecimal format is respectively stored. In the other information area 604, the necessary data is stored.

In the example shown in Fig. 7 (a), since a value of the response control information 603 is "00000000" in any of the RFID tags 20 where the tag IDs are "ID0001" and "ID0002", the response control information 505 included in the search command is different from the response control information 603 stored in the non-volatile memory 240 and therefore both RFID tags respond with their IDs and change to the ID state.

The larger the number of RFID tags 20 existing in the communication-enabled range of the antenna 130 of the reader/writer 10 is, the higher the probability of collision of the responses from the RFID tag 20 for the search command becomes. When the collision occurs, the reader/writer 10 transmits the FAIL command to the RFID tag 20 in the communication-enabled range. When the RFID tag 20 receives the FAIL command, if it is in the ID state, the collision arbitration process is conducted to control transmission of response to the reader/writer 10 and to resolve the collision of responses (#405 of Fig. 4). As the collision arbitration process (anti-collision process), for example, a random number is generated in the RFID tag to determine whether the response should be sent to the reader/writer depending on the predetermined numerical value condition (for example, 0 or higher, etc.).

Here, it is assumed that the RFID tag 20 having the tag ID of "ID0001" is allowed to send a response to the search command after the collision arbitration process.

The data processor 200 of RFID tag 20 transmits "ID0001" as its own tag ID 601 to the reader/writer 10 (#406 of Fig. 4).

After transmission of the tag ID, the data processor 200 receives the command transmitted from the reader/writer 10 (#407 of Fig. 4). If the reader/writer 10 receives the tag ID transmitted from the RFID tag 20 normally as explained above, the reader/writer 10 transmits the DATA_READ command to the RFID tag 20.

When the command received from the reader/writer 10 is the DATA_READ command (DATA_READ command in #407 of Fig. 4), the RFID tag 20 shifts to the state (DATA_EXCHANGE state) of being ready for exchange of data with the reader/writer 10 (#408 of Fig. 4). The data processor 200 reads the contents of data designated by the received DATA_READ command from the non-volatile memory 240 and then transmits the same contents to the reader/ writer 10 (#409 of Fig. 4).

When the response control information write command is received from the reader/writer 10 (Yes in #410 of Fig. 4), the data processor 200 stores the response control information included in the write command ("44F63B0E" in the above example) to the response control information 603 of the non-volatile memory 240 (#411 of Fig. 4).

Thereafter, upon reception of the INITIALIZE command from the reader/writer 10 (INITIALIZE COMMAND IN #412 OF Fig. 4), the response control unit 201 resets the status of the RFID tag 20 to the ready state (#401 of Fig. 4). When the other command is received, (#413 of Fig. 4), the response control unit 201 executes the process in accordance with content of command (#413 of Fig. 4) and waits for the next command (#412 of Fig. 4).

As shown in Fig. 7(b), since the RFID tag 20 received and executed the response control information write command normally, the response control information 603 in the RFID tag 20 having the tag ID of "ID0001" has been updated from "00000000" to "44F63B0E" which has been transmitted from the reader/writer 10. On the other hand, in the RFID tag 20 having the tag IDof "ID0002", the response control information still remains as "00000000" because the response for the search command is not completed.

Next, Fig. 5(b) assumes that the search command is transmitted again to each RFID tag 20 from the reader/writer after the contents stored in the non-volatile memory 240 of the RFID tag 20 change to the state of Fig. 7(b).

Since the response control information 503 ("44F63B0E") of the search command is identical to the response control information 603 ("44F63B0E") stored in the non-volatile memory 240, the RFID tag 20 having the tag ID "ID0001" determines that a response is not required and does not transmit a response to the reader/writer 10. Therefore, it is prevented that the RFID tag 20 having completed the normal response to the previous search command sends the response for the search command with the same response control information many times. In this manner, the transmission of responses for the search command can be adequately reduced.

Meanwhile, since the RFID tag 20 having the tag ID of "ID0002" does not yet complete the response for the search command, the response control information 603 remains as "00000000". Since the response control information 505 ("44F63B0E") of the search command is different from the response control information 603 ("00000000") stored in the non-volatile memory 240, the response control unit 201 determines that the response is required for the search command and transmits the response for the search command to the reader/writer 10.

When the response for the search command is completed normally, content of the response control information 603 is changed to "44F63BOE" from "00000000" as in the case of the RFID tag 20 having the tag ID of "ID0001". Thereafter, the RFID tag 20 having the tag ID of "ID0002" does not send the response for the search command including the response control information 505 of "44F63B0E"

These processes are repeated, as explained with reference to Fig. 3, until detection of the RFID tag 20 existing in the communication-enabled range of the antenna 130 of the reader/writer 10 is completed (Yes in #311 of Fig. 3).

Next, the process will be explained required for the situation where an RFID tag 20 receives another search command after all RFID tags have been completed to process to the previous search commands.

When the processing period is changed (Yes in #201 of Fig. 2) as explained above, the generator 303 of host computer 30 generates a new response control information to transmit a new search instructing command to the reader/writer 10 (#202 of Fig. 2). In the case where the time information obtained is "1156987784", the generator 303 transmits a new search instructing command to the reader/writer 10 with "1156987784" used as the parameter (#203 of Fig. 2).

The reader/writer 10 having received the new search instructing command sets the parameter "20061010905" included in the search instructing command to the response control information 505 of the search command, then generates a search command with the response control information "44F63B88" in the hexadecimal format (#302 of Fig. 3), and transmits the new search command to the RFID tag 20 (#303 of Fig. 3).

The RFID tag 20 compares, upon reception of the search command (#402 of Fig. 4), the response control information 503 of search command with the response control information 603 stored in the non-volatile memory 240 of the RFID tag 20 (#403 of Fig. 4). As shown in Fig. 7(c), the response control information of RFID tag 20 is "44F63B0E" and the response control information 505 of the search command is "44F63B88" which is different from the former response control information. Therefore, the response for the search command is determined to be necessary (No in #403 of Fig. 4) and the tag ID of RFID tag 20 is transmitted to the reader/writer 10 as explained above (#406 of Fig. 4). As explained above, even when a response for the search command is needed to be sent again after the response control information 603 indicating that the response has completed normally for the previous search command is stored in the non-volatile memory 240 of RFID tag 20, the response for the new search command can be started again without clearing the response control information 603 stored in the non-volatile memory 240 of RFID tag 20. Namely, at the beginning, the data "44F63BOE" was the information indicating that the processing of the previous search command was completed, but when the new response control information "44F63B88" has been generated, the preceding information is no longer the response control information for the search command. Therefore, a new response can be sent again to the search command even when the response control information 603 stored in the non-volatile memory 240 of RFID tag 20 is not updated.

Moreover, when the normal response is completed for the new search command, the response control information 603 of the non-volatile memory 240 of RFID tag 20 is changed to "44F63B88". Accordingly, since the response for the search command is suspended as explained above while the search command setting "44F63B88" to the response control information 505 is valid, repeated response by the RFID tag 20 having completed the response for the new search command can be prevented.

In the embodiment explained above, an example of using the time information for the response control information has been explained, but a random number may also be used in place of the time information. In this case, a random number generator (not illustrated) for generating random numbers is provided in the host computer 30. The generator 30 generates a random number with the random number generator, upon reception of instruction for generation of the response control information and sets the generated random number as the response control information. The subsequent flow of processes will not be explained below in detail because these processes may be implemented by replacing the time information with the random number.

Moreover, any other method than using the time information or random number can be used if it can generate a different value whenever it is required, so long as it can be verified that the new response control information is same as or different from the previous one.

### <Third Embodiment>

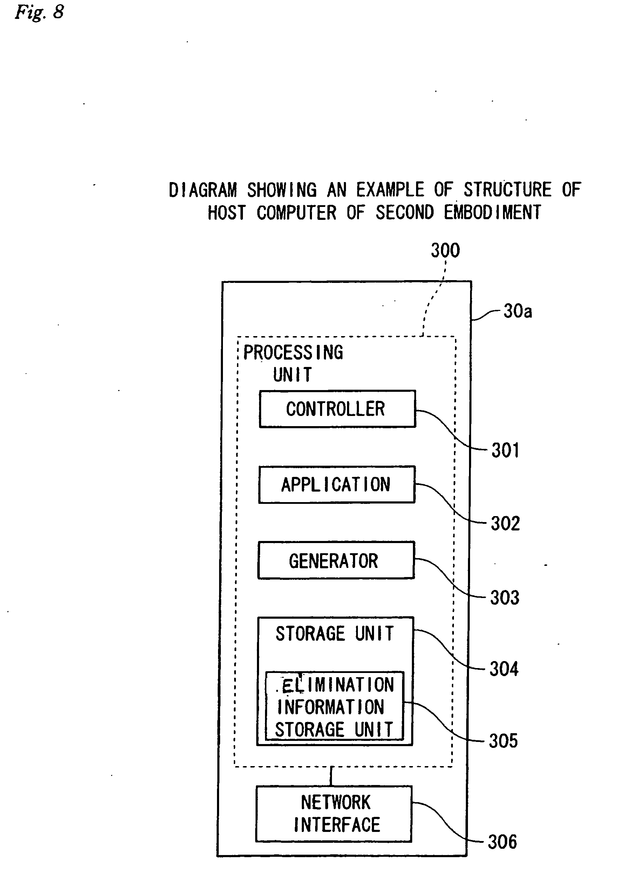

Fig. 8 is a diagram showing a structure of the host computer 30 in this third embodiment.

An elimination information storage unit 305 is provided in the storage unit 304. In the case that a random number is used for response control information or that a series of application processes are executed via a plurality of reader/writers 10 and it is required to execute the new search command for each reader/writer 10, a situation arises in which no response is sent for the search command to which a certain response should be sent if the same response control information is used.

In view of avoiding such a situation, the response control information which has been once generated is stored in the elimination information storage unit 305 and it is confirmed that, upon generation of the new response control information, the new response control information is not stored in the elimination information storage unit 305.

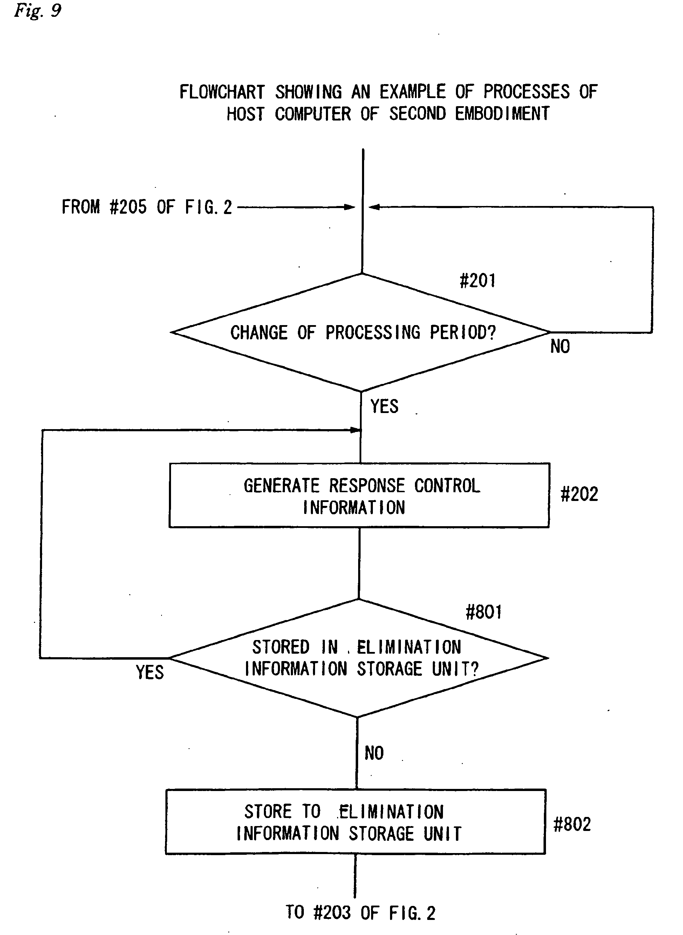

Fig. 9 is a flowchart showing an example of operations of the host computer in this third embodiment. #201 and #202 of Fig. 9 are identical to the operations explained for Fig. 2. When the generator 303 generates response control information in the #202, it checks whether the newly generated response control information is stored in the elimination information storage unit 305 (#801 of Fig. 9) . When the generated response control information is stored in the elimination information storage unit 305 (Yes in #801 of Fig. 9), the response control information is generated again after returning to the step #202. When the generated response control information is not stored in the elimination information storage unit 305 (No in #801 of Fig. 9), that response control information is used as the response control information for the search instruction command and is stored in the elimination information storage unit 305 (#802). Thereafter, the processes similar to that in Fig. 2 are executed in the steps after the step #203.

Accordingly, when it is requested, for example, to send a response for the search command whenever the RFID tag 20 passes the communication-enabled range of each antenna 130 of the reader/writers 10 on the situation that the processes are executed while the tag 20 is passing through a couple of reader/writers 10, a response can also be issued for the search command from the second reader/writer 10, because the response control information written when the response is issued to the first reader/writer 10 is never used as the response control information of the search command to the second reader/writer 10.

### <Fourth Embodiment>

In the case of the passive type RFID tag 20, since the power supply for operating the processors and storage units is acquired particularly by generating a current using the radio transmission received from the reader/writer 10 as explained above, if the radio transmission is in bad condition, the response control information is sometimes not written normally due to insufficient supply of electrical power even when the response control information write command is received from the reader/writer 10. In such a case, there is no problem when any part of the response control information is not written at all, but it causes a problem if such response control information is stored partially. For example, in the case of the first embodiment, it is assumed here that when the response control information recorded as "200610100900" is attempted to be updated to the newly generated "200610100955", only the last two letters happen to be updated resulting in the future time of "200610100955". If the newly regenerated response control information happens to be changed thereafter to "200610100955", the RFID tag 20 to which the response control information is erroneously written can no longer send a response for the new search command to which the response shouldbemade. For example, in the case of the second embodiment, it is assumed here that when the response control information recorded as "44F63B88" is attempted to be updated to the newly generated "44F63C00", only the first three bytes happen to be updated resulting in the future time of "44F63C88". If the newly regenerated response control information happens to be changed thereafter to "44F63C88", the RFID tag 20 to which the response control information is erroneously written can no longer send a response for the new search command to which the response should be made.

If writing of the response control information into the RFID tag 20 fails for some reasons, write error information is sometimes notified to the reader/writer 10. When such write error information has been received, the reader/writer 10 can recover from the write error state by instructing the RFID tag to write repeatedly the response control information up to the predetermined number of times as the upper limit.

Otherwise, when the response control information is generated regularly in the ascending or descending sequence like the timestamp as the above example, the response control information 603 written in the RFID tag 20 can be compared with the response control information 503 included in the search command. In the case where the response control information written in the RFID tag 20 is unreasonably larger or smaller in comparison with the response control information 503 included in the search command, the response control information of such RFID tag 20 can be assumed to be in the erroneous state. As explained above, the situation can be prevented that the RFID tag 20 does not send a response for the search command to which the response should be made because of the response control information which has been written erroneously by acquiring the response control information written erroneously to the RFID tag 20 beforehand, storing such information to the elimination information storage unit 305, checking whether the generated response control information happens to be equal with that stored in the elimination information storage unit 305 at the time of generating a new response control information, and then generating again a new response control information without using the generated response control information when the above response control information happens to be equal.

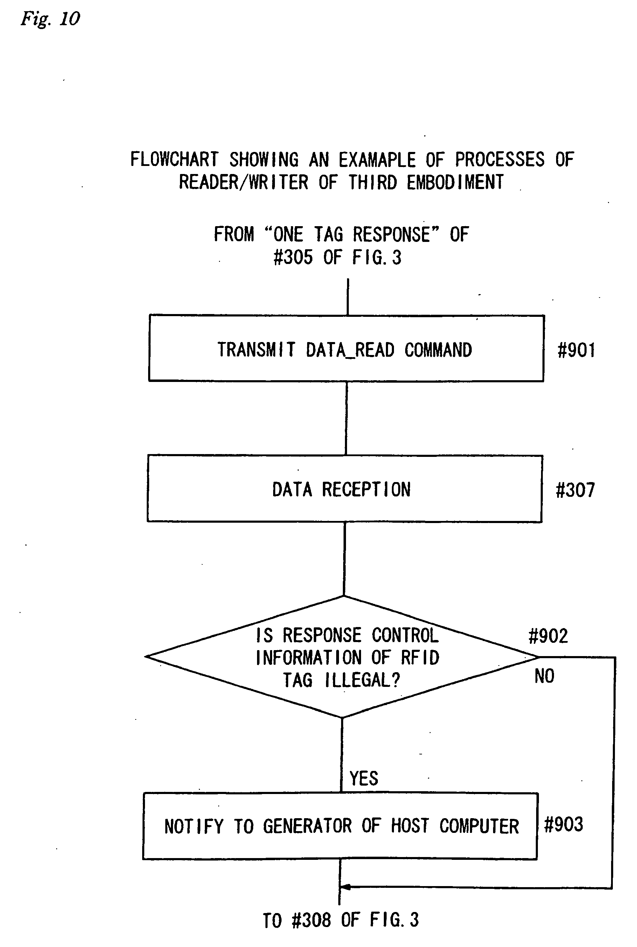

Fig. 10 is a diagram showing an example of the processes of the reader/writer 10 of the fourth embodiment. It is assumed that the response control information in the search command is different at this time from the response control information stored in the non-volatile memory 240 of the RFID tag 20. The steps from #301 to #305 of Fig. 3 conduct the operations similar to that of Fig. 3. When "one tag response" is determined in the step #305, the DATA_READ command is transmitted to the RFID tag 20. In this case, however, the DATA_READ command is generated and transmitted to read the data of the response control information 240 stored in the non-volatile memory 240 of RFID tag 20 (#901). When the response for the DATA_READ command is received (#307 of Fig. 10), the response control information 603 stored in the RFID tag 20 included in the response is compared with the response control information 503 of search command to determine whether the response control information 603 stored in the RFID tag 20 is illegal (#902 of Fig. 10). When the response control information stored in the RFID tag 20 is not illegal (No in #902 of Fig. 10), the step #308 and the subsequent steps of Fig. 3 are executed. When the response control information stored in the RFID tag 20 is determined to be illegal (Yes in #902 of Fig. 10), the received response control information 603 of RFID tag 20 is notified to the host computer 30 for storing in the elimination information storage unit 305 (#903 of Fig. 10). Thereafter, the step of #308 and the subsequent steps of Fig. 3 are executed. Here, it is also possible that a message to the host computer 30 is only stored, in the step #903 of Fig. 10, to the storage unit 106 of the reader/writer 10 and is thereafter notified to the host computer 30 at the time of sending the result of processes.

The host computer 30 stores the illegal response control information notified from the reader/writer 10 to the elimination information storage unit 305. Therefore, the response control information which is inadequately stored in the RFID tag 20 can be excepted when the generator 303 generates the response control information and it is also possible that the normal response can be made for the RFID tag 20 to which an erroneous response control information is stored.

### <Fifth Embodiment>

In the first to fourth embodiments, an example that the response control information for determining whether the RFID tag 20 has normally completed the processing for the search command from the reader/writer 10 is generated in the host computer 30 has been explained, but it is also possible that such response control information is generated by the reader/writer 10.

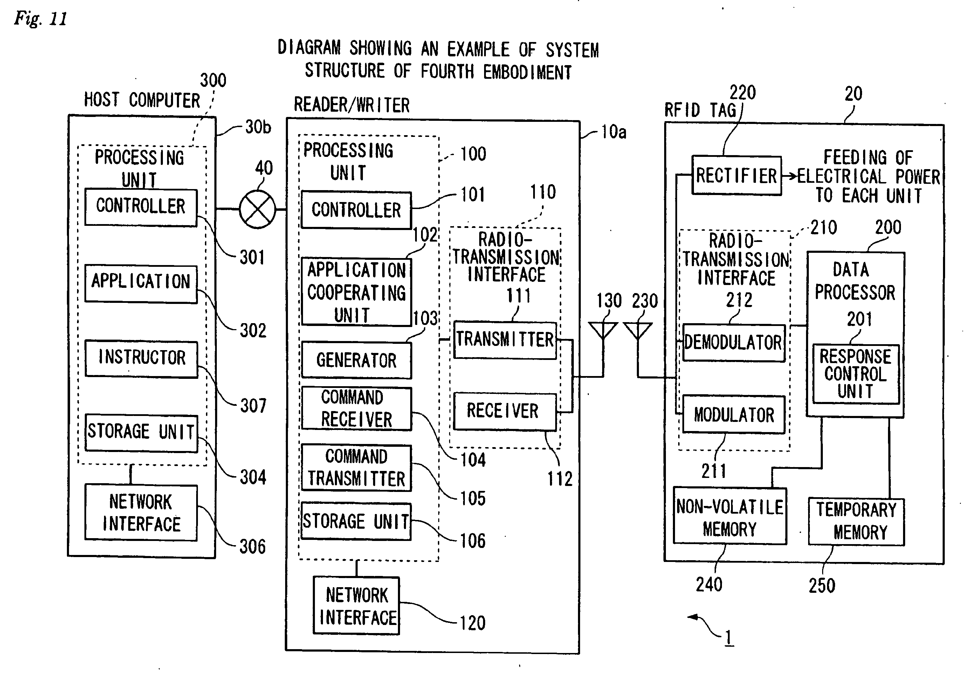

Fig. 11 shows an example of a system structure for generating a response control information in the reader/writer 10.

In place of the generator 303 of the host computer 30 in the first to third embodiments, the reader/writer 10a is provided with a generator 103. Moreover, a host computer 30b comprises an instructor 307 in place of the generator 303. The host computer 30 does not generate the response control information and the instructor 307 instructs the reader/writer 10 to generate the response control information, upon detection in change of the processing period. The application cooperating unit 102 of reader/writer 10 instructs the generator 103 to generate the response control information, upon acceptance of the instruction to generate the response control information from the instructor 307 of host computer 30b. Thereafter, a search command is generated using the response control information generated by the generator 103. Explanation of the subsequent process is skipped because it is similar to that in the step #303 of Fig. 2.

Here, it is more preferable that the response control information generated by the generator 103 of reader/writer 10a is notified to the host computer 30b and necessity for use of the generated response control information is inquired to the host computer 30b. Moreover, since the response control information of the same content may be generated by a plurality of reader/writers 30a in the case where a plurality of reader/writers 30a exist under the control of the host computer 30a and the situation may occur that no response is issued from the RFID tag 20 from which the response should be made when such response control information is used as the parameter 503 of the search command, it is preferable that the response control information generated by the reader/writer 10a is administrated by the host computer 30b in order to eliminate occurrence of such a state.

Moreover, even in the case where the reader/writer 10a generates the response control information, use of inadequate response control information can be prevented by combining the first to third embodiments.

### <Other Embodiments>

In the first to fifth embodiments, contents of the information (parameter (response control information) 503 included in the search command) indicating that the normal response for the search command is completed are stored in the non-volatile memory 240 of the RFID tag 20. However, in recent years, with development in the electrical power saving technology, contents stored in the temporary memory 250 can be maintained for a longer period of time. In the case where a longer period of time can be acquired for maintaining the contents stored in the temporary memory 250 without any problem on the processes, contents of the information (parameter (response control information) included in the search command) 503 indicating that the normal response for the search command is completed may also be stored in the temporarymemory 250, in addition to the non-volatile memory 240.

According to the present invention, a response can be sent effectively to the reader/writer from the RFID tag by preventing duplicate responses from the RFID tag once detected by the reader/writer at the time of later search commands for RFID tags existing within the communication-enabled range of the reader/writer.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents covered by the appended claims may be regarded as falling within the scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A method for controlling a response of an RFID tag (20) which transmits a response in accordance with an inquiry from a reader/writer (10), the method comprising the steps of:
transmitting, from the reader/writer (10), a search command for detecting the RFID tag (20) within the communication-enabled range of the reader/writer (10) together with a first response control information for determining whether the RFID tag (20) has already transmitted the response, and
comparing, in the RFID tag (20), upon reception of the search command from the reader/writer (10), the first response control information transmitted together with the search command with a second response control information stored in a non-volatile memory (240) of the RFID tag (20),
determining, in the RFID tag, not to transmit the response to the search command when the first response control information is identical to the second response control information,
transmitting, in the RFID tag (20), a response to the search command when the first response control information is different from the second response control information, and updating the second response control information stored in the non-volatile memory (240) of the RFID tag (20) with the first response control information received from the reader/writer (10).

2. An RFID system (1) comprising:
a reader/writer (10) operable to communicate by radio with an RFID tag (20),
a computer (30) operable to have mutual communication with the reader/writer (10),
wherein the computer (30) comprises a generating part (303) which generates a first response control information for determining whether or not the RFID tag (20) responds to a search command, and
a search instructing part which is operable to transmit, to the reader/writer, a search instructing command for instructing detection of the RFID tag existing within the communication-enabled range of the reader/writer together with the first response control information generated by the generating part,
wherein the reader/writer (10) comprises:
a receiving part which is operable to receive the search instructing command and the first response control information transmitted from the computer, and
a search command transmitting part which is operable to transmit, to the RFID tag (20), the search command for detecting the RFID tag existing in the communication-enabled range of the reader/writer (10) together with the received first response control information,
wherein the RFID tag (20) is operable to:
compare, upon reception of the search command from the reader/writer (10), the first response control information with a second response control information stored in a non-volatile memory (240) of the RFID tag (20);
determine not to transmit the response to the search command when the first response control information is identical to the second response control information; and when the first response control information is different from the second response control information, to transmit a response to the search command, and to update the second response control information stored in the non-volatile memory (240) of the RFID tag (20) with the first response control information received from the reader/writer (10).

3. The RFID system according to claim 2, wherein the reader/writer (10) further comprises;
a receiving part which is operable to receive the second response control information stored in the non-volatile memory (240) of the RFID tag (20) from the RFID tag (20), and
a notifying part which is operable to determine validity of the second response control information stored in the non-volatile memory (240) of the RFID tag (20) when the first response control information is determined to be different from the second response control information, and to notify, to the computer (30), the second response control information as an elimination information not to transmit the same second response control information as the first response control information when invalidity of the second response control information is determined.

4. A reader/writer (10) for use in an RFID system (1), the reader/writer (10) being operable to:
receive from a computer (30) a search instructing command;
upon reception of the search instructing command, to generate a search command including a first response control information and an address area indicating a memory region of a non-volatile memory (240) of an RFID tag (20); and
to transmit the search command to the RFID tag (20); wherein
the search command instructs the RFID tag (20) to respond only if data not identical to the first response control information is stored in the memory region indicated in the address area, and
either the search instructing command includes the first response control information, or the reader/writer (10) is operable to generate the first response control information.

5. A computer program which, when executed by a computer, causes the computer to become the reader/writer as claimed in claim 4.

## Patentansprüche

1. Verfahren zum Steuern einer Antwort eines RFID-Etikettes (20), das eine Antwort gemäß einer Anfrage von einem Leser/Schreiber (10) sendet, welches Verfahren die Schritte umfasst:
Senden, von dem Leser/Schreiber (10), eines Suchbefehls zum Detektieren des RFID-Etikettes (20) innerhalb des kommunikationsfähigen Bereiches des Lesers/Schreibers (10) zusammen mit ersten Antwortsteuerinformationen zum Bestimmen, ob das RFID-Etikett (20) die Antwort bereits gesendet hat, und
Vergleichen, im RFID-Etikett (20), bei Empfang des Suchbefehls von dem Leser/Schreiber (10), der ersten Antwortsteuerinformationen, die zusammen mit dem Suchbefehl gesendet wurden, mit zweiten Antwortsteuerinformationen, die in einem nichtflüchtigen Speicher (240) des RFID-Etikettes (20) gespeichert sind,
Bestimmen, im RFID-Etikett, die Antwort auf den Suchbefehl nicht zu senden, wenn die ersten Antwortsteuerinformationen mit den zweiten Antwortsteuerinformationen identisch sind,
Senden, im RFID-Etikett (20), einer Antwort auf den Suchbefehl, wenn sich die ersten Antwortsteuerinformationen von den zweiten Antwortsteuerinformationen unterscheiden, und Aktualisieren der zweiten Antwortsteuerinformationen, die in dem nichtflüchtigen Speicher (240) des RFID-Etikettes (20) gespeichert sind, mit den ersten Antwortsteuerinformationen, die von dem Leser/Schreiber (10) empfangen wurden.

2. RFID-System (1), umfassend:
einen Leser/Schreiber (10), der betriebsfähig ist, um über Funk mit einem RFID-Etikett (20) zu kommunizieren,
einen Computer (30), der betriebsfähig ist, um eine gegenseitige Kommunikation mit dem Leser/Schreiber (10) auszuführen,
welcher Computer (30) einen Erzeugungsteil (303) umfasst, der erste Antwortsteuerinformationen erzeugt, zum Bestimmen, ob das RFID-Etikett (20) auf einen Suchbefehl antwortet oder nicht, und
einen Suchinstruktionsteil, der betriebsfähig ist, um an den Leser/Schreiber einen Suchinstruktionsbefehl zum Instruieren der Detektion des RFID-Etikettes zu senden, das innerhalb des kommunikationsfähigen Bereiches des Lesers/Schreibers existiert, zusammen mit den ersten Antwortsteuerinformationen, die durch den Erzeugungsteil erzeugt wurden,
bei dem der Leser/Schreiber (10) umfasst:
einen Empfangsteil, der betriebsfähig ist, um den Suchinstruktionsbefehl und die ersten Antwortsteuerinformationen zu empfangen, die von dem Computer gesendet wurden, und
einen Suchbefehlssendeteil, der betriebsfähig ist, um an das RFID-Etikett (20) den Suchbefehl zu senden, zum Detektieren des RFID-Etikettes, das in dem kommunikationsfähigen Bereich des Lesers/Schreibers (10) existiert, zusammen mit den empfangenen ersten Antwortsteuerinformationen,
bei dem das RFID-Etikett (20) betriebsfähig ist, um:
bei Empfang des Suchbefehls von dem Leser/Schreiber (10) die ersten Antwortsteuerinformationen mit zweiten Antwortsteuerinformationen zu vergleichen, die in einem nichtflüchtigen Speicher (240) des RFID-Etikettes (20) gespeichert sind;
zu bestimmen, die Antwort auf den Suchbefehl nicht zu senden, wenn die ersten Antwortsteuerinformationen mit den zweiten Antwortsteuerinformationen identisch sind; und eine Antwort auf den Suchbefehl zu senden, wenn sich die ersten Antwortsteuerinformationen von den zweiten Antwortsteuerinformationen unterscheiden, und die zweiten Antwortsteuerinformationen, die in dem nichtflüchtigen Speicher (244) des RFID-Etikettes (20) gespeichert sind, mit den ersten Antwortsteuerinformationen zu aktualisieren, die von dem Leser/Schreiber (10) empfangen wurden.

3. RFID-System nach Anspruch 2, bei dem der Leser/Schreiber (10) ferner umfasst:
einen Empfangsteil, der betriebsfähig ist, um die zweiten Antwortsteuerinformationen, die in dem nichtflüchtigen Speicher (240) des RFID-Etikettes (20) gespeichert sind, von dem RFID-Etikett (20) zu empfangen, und
einen Meldeteil, der betriebsfähig ist, um die Gültigkeit der zweiten Antwortsteuerinformationen zu bestimmen, die in dem nichtflüchtigen Speicher (240) des RFID-Etikettes (20) gespeichert sind, wenn bestimmt wird, dass sich die ersten Antwortsteuerinformationen von den zweiten Antwortsteuerinformationen unterscheiden, und an den Computer (30) die zweiten Antwortsteuerinformationen als Eliminierunginformationen zu melden, um dieselben zweiten Antwortsteuerinformationen nicht als die ersten Antwortsteuerinformationen zu senden, wenn die Ungültigkeit der zweiten Antwortsteuerinformationen bestimmt wird.

4. Leser/Schreiber (10) zur Verwendung in einem RFID-System (1), welcher Leser/Schreiber (10) betriebsfähig ist, um:
von einem Computer (30) einen Suchinstruktionsbefehl zu empfangen;
bei Empfang des Suchinstruktionsbefehls einen Suchbefehl zu erzeugen, der erste Antwortsteuerinformationen und ein Adressengebiet enthält, das eine Speicherregion eines nichtflüchtigen Speichers (240) eines RFID-Etikettes (20) angibt; und
den Suchbefehl an das RFID-Etikett (20) zu senden; bei dem
durch den Suchbefehl das RFID-Etikett (20) instruiert wird, nur zu antworten, falls Daten, die mit den ersten Antwortsteuerinformationen nicht identisch sind, in der in dem Adressengebiet angegebenen Speicherregion gespeichert sind, und
entweder der Suchinstruktionsbefehl die ersten Antwortsteuerinformationen enthält oder der Leser/Schreiber (10) betriebsfähig ist, um die ersten Antwortsteuerinformationen zu erzeugen.

5. Computerprogramm, durch das dann, wenn es durch einen Computer ausgeführt wird, der Computer als Leser/Schreiber nach Anspruch 4 fungiert.

## Revendications

1. Procédé pour contrôler une réponse d'une étiquette RFID (20) qui transmet une réponse conformément à une interrogation en provenance d'un dispositif de lecture/écriture (10), le procédé comprenant les étapes consistant à :
transmettre, depuis le dispositif de lecture/écriture (10), une commande de recherche pour détecter l'étiquette RFID (20) à l'intérieur de la portée de communication autorisée du dispositif de lecture/écriture (10) conjointement avec une première information de contrôle de réponse pour déterminer si l'étiquette RFID (20) a déjà transmis la réponse, et
comparer, dans l'étiquette RFID (20), lors de la réception de la commande de recherche en provenance du dispositif de lecture/écriture (10), la première information de contrôle de réponse transmise conjointement avec la commande de recherche avec une seconde information de contrôle de réponse stockée dans une mémoire non volatile (240) de l'étiquette RFID (20),
déterminer, dans l'étiquette RFID, de ne pas transmettre la réponse à la commande de recherche lorsque la première information de contrôle de réponse est identique à la seconde information de contrôle de réponse,
transmettre, dans l'étiquette RFID (20), une réponse à la commande de recherche lorsque la première information de contrôle de réponse est différente de la seconde information de contrôle de réponse, et mettre à jour la seconde information de contrôle de réponse stockée dans la mémoire non volatile (240) de l'étiquette RFID (20) avec la première information de contrôle de réponse reçue en provenance du dispositif de lecture/écriture (10).

2. Système RFID (1) comprenant :
un dispositif de lecture/écriture (10) exploitable pour communiquer par radio avec une étiquette RFID (20),
un ordinateur (30) exploitable pour avoir une communication mutuelle avec le dispositif de lecture/écriture (10),
dans lequel l'ordinateur (30) comprend une partie de génération (303) qui génère une première information de contrôle de réponse pour déterminer si l'étiquette RFID (20) répond ou non à une commande de recherche, et
une partie d'instruction de recherche qui est exploitable pour transmettre, au dispositif de lecture/écriture, une commande d'instruction de recherche pour donner pour instruction la détection de l'étiquette RFID existant à l'intérieur de la portée de communication autorisée du dispositif de lecture/écriture conjointement avec la première information de contrôle de réponse générée par la partie de génération,
dans lequel le dispositif de lecture/écriture (10) comprend :
une partie de réception qui est exploitable pour recevoir la commande d'instruction de recherche et la première information de contrôle de réponse transmises depuis l'ordinateur, et
une partie de transmission de commande de recherche qui est exploitable pour transmettre, à l'étiquette RFID (20), la commande de recherche pour détecter l'étiquette RFID existant dans la portée de communication autorisée du dispositif de lecture/écriture (10) conjointement avec la première information de contrôle de réponse reçue,
dans lequel l'étiquette RFID (20) est exploitable pour :
comparer, lors de la détection de la commande de recherche en provenance du dispositif de lecture/écriture (10), la première information de contrôle de réponse avec une seconde information de contrôle de réponse stockée dans une mémoire non volatile (240) de l'étiquette RFID (20) ;
déterminer de ne pas transmettre la réponse à la commande de recherche lorsque la première information de contrôle de réponse est identique à la seconde information de contrôle de réponse ; et lorsque la première information de contrôle de réponse est différente de la seconde information de contrôle de réponse, transmettre une réponse à la commande de recherche, et mettre à jour la seconde information de contrôle de réponse stockée dans la mémoire non volatile (240) de l'étiquette RFID (20) avec la première information de contrôle de réponse reçue en provenance du dispositif de lecture/écriture (10).

3. Système RFID selon la revendication 2, dans lequel le dispositif de lecture/écriture (10) comprend en outre :
une partie de réception qui est exploitable pour recevoir la seconde information de contrôle de réponse stockée dans la mémoire non volatile (240) de l'étiquette RFID (20) en provenance de l'étiquette RFID (20), et
une partie de notification qui est exploitable pour déterminer la validité de la seconde information de contrôle de réponse stockée dans la mémoire non volatile (240) de l'étiquette RFID (20) lorsque la première information de contrôle de réponse est déterminée comme étant différente de la seconde information de contrôle de réponse, et pour notifier, à l'ordinateur (30), la seconde information de contrôle de réponse comme une information d'élimination et de ne pas transmettre la même seconde information de contrôle de réponse que la première information de contrôle de réponse lorsque l'invalidité de la seconde information de contrôle de réponse est déterminée.

4. Dispositif de lecture/écriture (10) destiné à être utilisé dans un système RFID (1), le dispositif de lecture/écriture (10) étant exploitable pour :
recevoir en provenance d'un ordinateur (30) une commande d'instruction de recherche ;
lors de la réception de la commande d'instruction de recherche, générer une commande de recherche incluant une première information de contrôle de réponse et une zone d'adresse indiquant une région de mémoire d'une mémoire non volatile (240) d'une étiquette RFID (20) ; et
transmettre la commande de recherche à l'étiquette RFID (20) ; où
la commande de recherche donne pour instruction à l'étiquette RFID (20) de répondre uniquement si des données non identiques à la première information de contrôle de réponse sont stockées dans la région de mémoire indiquée dans la zone d'adresse, et
soit la commande d'instruction de recherche inclut la première information de contrôle de réponse, soit le dispositif de lecture/écriture (10) est exploitable pour générer la première information de contrôle de réponse.

5. Programme informatique qui, lorsqu'il est exécuté par un ordinateur, amène l'ordinateur à devenir le dispositif de lecture/écriture tel que revendiqué dans la revendication 4.
